# EUROPÄISCHE PATENTSCHRIFT

(11) **EP 0 482 459 B1**
(45) Veröffentlichungstag und Bekanntmachung des Hinweises auf die Patenterteilung: **12.06.1996**
(21) Anmeldenummer: 91117440.7
(22) Anmeldetag: 12.10.1991
(51) Int. Cl.: G11B 23/087

(54) **Magnetbandkassette und ein separates Gehäuseteil dafür**
Magnetic tape cassette and separate casing for same
Cassette à bande magnétique et boitier séparé pour celle-ci

(30) Priorität: 25.10.1990 DE 9014777 U
(43) Veröffentlichungstag der Anmeldung: 29.04.1992
(73) Patentinhaber: BASF Magnetics GmbH, D-68165 Mannheim (DE)
(72) Erfinder: Schoettle, Klaus, W-6900 Heidelberg (DE); Eberhard, Joachim, W-7634 Kippenheim (DE); Schmidts, Kurt, W-7635 Schwanau (DE); Pavelka, Bozidar, W-7608 Willstaett (DE)
(74) Vertreter: Langfinger, Klaus-Dieter, Dr.

(56) Entgegenhaltungen:
- EP-A- 0 031 927
- DE-A- 1 954 735
- DE-A- 2 027 379
- DE-U- 8 621 947
- DE-U- 8 908 982
- GB-A- 2 150 532
- US-A- 4 633 354

## Beschreibung

Die Erfindung betrifft eine Magnetbandkassette, insbesondere eine Kompakt-Kassette, bestehend aus zwei koplanar angeordneten, drehbar gelagerten Wickelkernen und einem dazwischen auf- und abwickelbaren Magnetband und aus Gehäusehälften mit Boden- und Deckelwänden, Vorder-, Rück- und Seitenwänden, wobei die Gehäusehälften eine von der Vorderwand ausgehende Gehäuseerhöhung zur Aufnahme des wenigstens einen Magnetkopfes aufweisen, wobei die die Boden- und Deckelwände der Gehäusehälften bildenden Gehäuseteile im wesentlichen plan ausgebildet sind und die Gehäuseerhöhung mittels mindestens eines mit den im wesentlichen planen Gehäuseteilen verbindbaren separaten Gehäuseteils ausgebildet ist, und ein separates Gehäuseteil dafür.

Bei Kompakt-Kassetten gemäß DIN 45 516 (Juni 1976) erstreckt sich die Gehäuseerhöhung, ausgehend von der Kassettenmitte symmetrisch nach beiden Seiten und entspricht längenmäßig etwa zwei Dritteln der Frontseitenlänge. Im Bereich der Gehäuseerhöhung sind drei Öffnungen zur Aufnahme von Magnetköpfen angeordnet. Ebenfalls im Bereich der Gehäuseerhöhung sind Führungselemente für das Magnetband vorgesehen, von denen die Aufnahme-/wiedergabequalität der Kassette wesentlich abhängt. Die übliche Verwendung von relativ billigem Kunststoff in der Kombination mit der Formausbildung der Gehäuseerhöhung führt zur Biegung der Gehäusehälften, insbesondere bei Temperatureinwirkung, wodurch auch die Stellung der Führungselemente verändert wird und sich damit Kassetten minderer Qualität ergeben.

Aus der GB-A 21 50 532 ist eine Kompakt-Kassette bekannt, bei der zwei separate Kopferhöhungsplatten in die im wesentlichen planen Boden- und Deckelwände des Kassettengehäuses einsteckbar ausgebildet sind, um eine kostengünstigere Versandfähigkeit von Kompakt-Kassetten zu ermöglichen.

Neben der Verringerung der äußeren Gehäusedicke sind dabei die üblichen, die Herstellung der Gehäuse verbilligenden Ziele: ein geringes Gehäusegewicht und ein geringstmöglicher Materialbedarf angestrebt.

Die Erfindung hat sich daher die Aufgabe gestellt, die Nachteile der bekannten Magnetbandkassetten, insbesondere für deren Serienherstellung, zu vermeiden.

Die Lösung der Aufgabe wird mit einer Magnetbandkassette, gemäß Patentanspruch 1 bzw. mit einem separaten Gehäuseteil gemäß Patentanspruch 13 gelöst.

Damit wird erreicht, daß mit relativ geringem Aufwand ein hohes Qualitätsprodukt herstellbar wird, was unter Vermeidung einer auf die Planizität der Innenflächen wirkenden Inhomogenität, die z.B. wegen einer Stufenbildung bei der Kompakt-Kassette auftritt, möglich wird.

Der separate Gehäuseteil ist durch wenigstens eine Schnapp-, Knöpf- oder Klemmverbindung mit den im wesentlichen planen Gehäuseteilen (im folgenden als "plane Gehäuseteile" bezeichnet) verbindbar.

Es ist auch eine Verbindung über Kleben, Schweißen und/oder Schrauben möglich.

Der separate Gehäuseteil ist zweckmäßig aus einem thermoplastischen, spritzbaren Kunststoff hergestellt.

Außerdem ist es möglich, durch Zusatz von leitfähigkeitserhöhendem Pulver, wie z.B. Kohlepulver, derartige Kunststoffe leitfähig zu machen.

Man kann jedoch auch den separaten Gehäuseteil aus magnetisch abschirmendem Metall, insbesondere aus weichmagnetischem Metall oder weichmagnetischer Metall-Legierung herstellen.

Der eine separate Gehäuseteil kann auch aus andersfarbigem Kunststoff- und/oder Metallmaterial als die planen Gehäuseteile bestehen. Es kann außerdem zweckmäßig sein, an der Innenwandung (den Innenwandungen) des separaten Gehäuseteils Positionierstege vorzusehen, die mit entsprechenden Vertiefungen/Stegen außen an den planen Gehäuseteilen zusammenwirken.

Dadurch läßt sich eine besonders leichte Montage der Kassette trotz größter Genauigkeit in der Zuordnung der separaten und planen Gehäuseteile erreichen.

Weiterhin kann es zweckmäßig sein, daß der separate Gehäuseteil Frontöffnungen aufweist und in deren Nähe zur Frontseitenlänge senkrechte Rippen zur Einengung des Freiraums der Bandschlaufe vorgesehen sind. Dadurch lassen sich Montageausfälle wegen Bandverklemmung weitgehend vermeiden.

Für die Gehäusestabilität ist es auch zweckmäßig, wenn die planen Gehäuseteile im Bereich des separaten Gehäuseteils Wandteile aufweisen, die formschlüssig ineinandergreifen.

Aus Gestaltungs- und Montagevereinfachungsgründen kann es auch zweckmäßig sein, daß der separate Gehäuseteil aus andersfarbigem Kunststoff- und/oder Metallmaterial als die planen Gehäuseteile besteht.

Ferner kann der separate Gehäuseteil von im wesentlichen U-Form (in Seitenansicht) selbst als verbindungseinrichtung für die Gehäuseteile, die im wesentlichen die Gehäusehälften bilden, benutzt werden.

Damit der separate Gehäuseteil selbst als Verbindungsmittel verwendbar ist, kann er aus elastisch nachgiebigem Material zur Erzeugung einer Klemmkraft bestehen, wobei das Material ein elastisch nachgiebiger Thermoplast oder ein federndes Metall sein kann. Auch durch Formgebung bei der Herstellung, wenn die freien Enden der U-Form-Armteile einen geringeren Abstand als die Länge des U-Form-Verbindungsteils aufweisen, kann eine Klemmkraft für die Gehäuseteile erzeugt werden.

Der separate Gehäuseteil für eine Magnetband-Kassette gemäß Patentanspruch 1 ist durch eine im wesentlichen U-Form in Seitenansicht, bestimmte Mittel zur Verbindung mit den planen Gehäuseteilen und Frontöffnungen für den Eintritt des Magnetkopfes gekennzeichnet.

In praktischer Ausbildung ist der separate Gehäuseteil mit wenigstens einer Schnapp-, Knöpf- oder Klemmverbindung zur Verbindung mit den Gehäuseteilen ausgebildet, wodurch sich lösbare Verbindungen realisieren lassen. Eine vorteilhafte Ausbildung ergibt sich durch die im wesentlichen U-Form des separaten Gehäuseteils in der Seitenansicht, wenn derselbe aus elastisch nachgiebigem oder beliebigem federnden Material be steht, für eine Klemmverbindung für die planen Gehäuseteile.

Zweckmäßig kann der separate Gehäuseteil an der Innenwandung mit Positionierstegen zum Zusammenwirken mit entsprechenden Vertiefungen oder Stegen außen an den planen Gehäuseteilen versehen sein.

Praktisch kann der separate Gehäuseteil Frontöffnungen aufweisen, in deren Nähe Rippen zur Einengung und Führung des an den Frontöffnungen entlang geführten Magnetbandes vorgesehen sein, um die Bandführung in Magnetkopfnähe zusätzlich zu verbessern.

Außerdem ist es herstellungsmäßig günstig, wenn der separate Gehäuseteil aus thermoplastischem spritzbarem Kunststoff besteht. Um Abschirmwirkungen im Kopfbereich zu erzielen, kann der separate Gehäuseteil aus einem Kunststoff mit Metallpartikeln oder -beschichtung oder aus Metall, insbesondere einem weichmagnetischen Metall oder einer weichmagnetischen Metall oder einer weichmagnetischen Metall-Legierung, bestehen.

Der separate Gehäuseteil kann auch aus andersfarbigem Kunststoff- und/oder Metallmaterial als die planen Gehäuseteile bestehen, um beispielsweise Designeffekte oder Unterscheidungskriterien für die Herstellung zu erhalten.

Ausführungsbeispiele der Erfindung sind in der Zeichnung dargestellt und nachfolgend beschrieben.

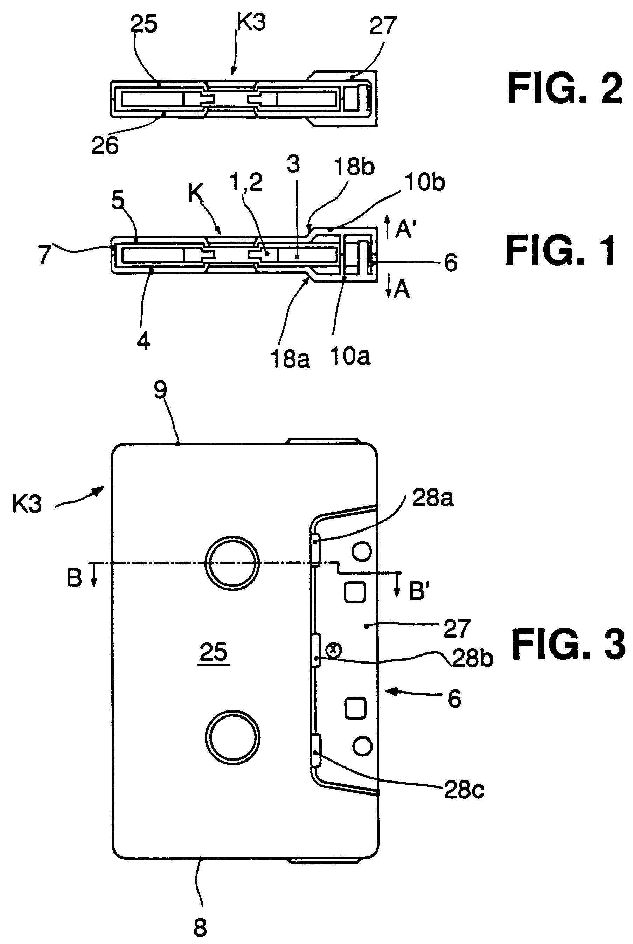

Die Zeichnung zeigt, in Figur 1 einen Querschnitt durch eine bekannte Kompakt-Kassette K
- Figur 2: denselben Querschnitt durch eine erfindungsgemäße Kompakt-Kassette K3 gemäß Schnittlinie B-B' in Figur 3
- Figur 3: eine Draufsicht auf die Kompakt-Kassette gemäß Figur 2
- Figur 4: eine schematische Darstellung der erfindungsgemäßen Kompakt-Kassette mit Bandführungs- und Umlenkelementen
- Figur 5-10: Befestigungsbeispiele zwischen dem separaten Gehäuseteil und den planen Gehäuseteilen
- Figur 11 a: eine Frontansicht des separaten Gehäuseteils

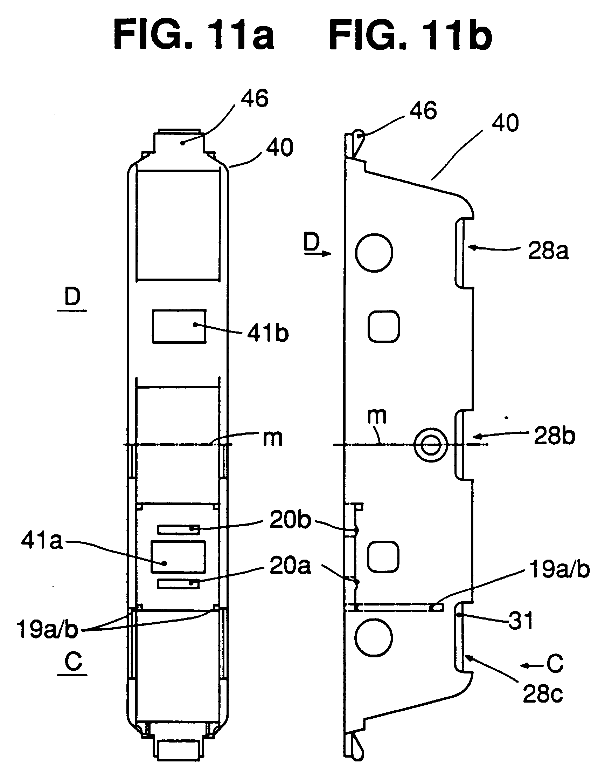

- Figur 11 b: eine Draufsicht auf den separaten Gehäuseteil gemäß Figur 11 a

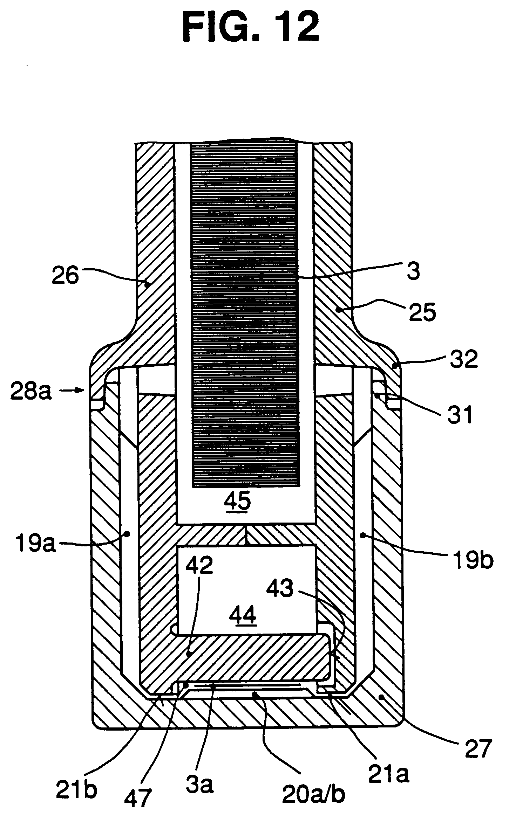

- Figur 12: einen Teil-Querschnitt durch den separaten Gehäuseteil und die planen Gehäuseteile mit dem darin enthaltenen Bandwickel

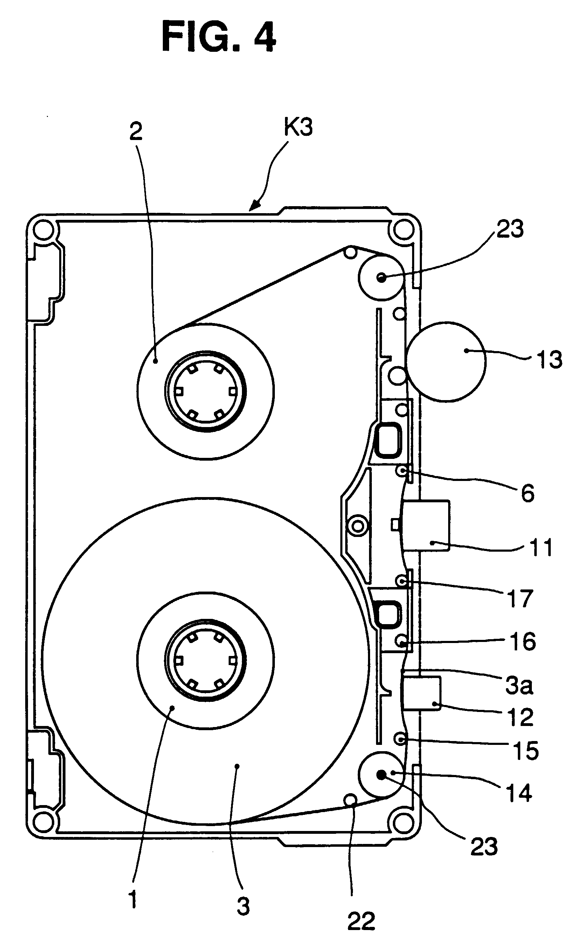

Die bekannten genormten Kompakt-Kassetten K bestehen aus zwei Koplanar angeordneten, drehbar gelagerten Wickelkernen 1, 2, mit darauf auf- und davon abwickelbarem Magnetband 3, und aus Gehäusehälften mit Boden- und Deckelwänden 4 bzw. 5, Vorder-, Rück- und Seitenwänden 6, 7 und 8, wobei die Gehäusehälften eine von der Vorderwand 6 ausgehende, sich rückwärts erstreckende Gehäuseerhöhung 10 a, 10 b zur Aufnahme von wenigstens einem Aufnahme-/Wiedergabe-Magnetkopf 11 (Fig. 4) aufweisen. Die Vorderwand 6 besitzt weitere zwei Öffnungen zur Aufnahme weiterer Geräteteile wie einen Löschkopf 12, einer Gummiandruckrolle 13 usw.. Damit diese Geräteteile mit dem Magnetband 3 in den erforderlichen, genau definierten Kontakt gebracht werden können, wird das Magnetband 3 vom auf dem Wickelkern 1 befindlichen Bandwickel in einer freien Bandschlaufe 3 a durch kassettenseitige Führungselemente, wie Umlenkröllchen 14, Führungsstifte 15, 16 und 17 entlang der Vorderwand 6 zum Aufwickeln auf Wickelkern 2 geführt bzw. umgekehrt, wenn die Kassette in der anderen Richtung betrieben wird. Geringe Abweichungen von ihrer Senkrechtstellung von ca. 25 µm und mehr führen bei diesen Führungselementen 14 bis 17 bereits zu deutlichen Azimutfehlern, die die Höhenwiedergabe von Tonsignalen bereits deutlich beeinträchtigen. Durch die die Gehäuseerhöhung ergebenden Stufen 18 a und 18 b mit ihrer im folgenden erläuterten, geringeren Wandstärke besitzt das Gehäuse eine mit üblichen Konstruktiven Mitteln nicht kompensierbare Inhomogenität. Während die Wandstärken der die Bandwickel abdeckenden Boden-und Deckelwände 4 bzw. 5 üblicherweise ca. 1,8 mm betragen, sind die Wandstärken der Gehäuseerhöhung 10 a und 10 b - zumindest im Bereich der Öffnungen in der Vorderwand 6 (im folgenden als Frontöffnungen bezeichnet) auf ca. 1,0 mm verringert. Bei der Herstellung im Spritzguß führte die Inhomogenität zu Materialspannungen, die sich im Falle von Wärmeeinwirkung als Aufbiegung der Teile 10 a und 10 b in den Richtungen A und A' (Fig. 1) ausgleichen.

Die Figur 2 zeigt die erfindungsgemäße Kassette K3 in dreiteiliger Anordnung, wobei die im wesentlichen außen und innen planen Gehäuseteile 25 und 26 durch ein die Gehäuseerhöhung bildendes, drittes Gehäuseteil 27

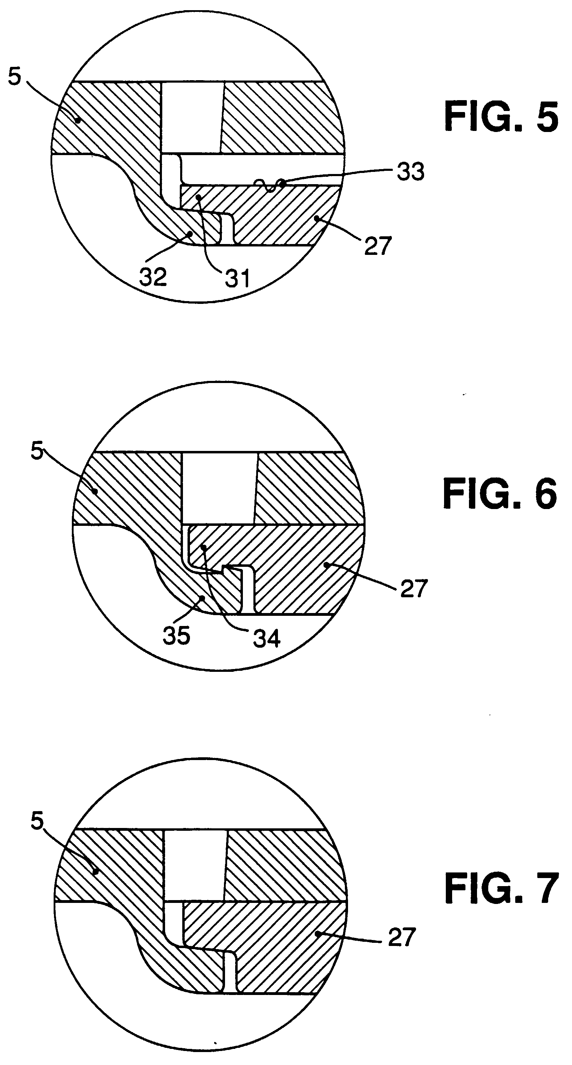

In Figur 3 ist der dritte oder separate Gehäuseteil 27 mit im wesentlichen U-förmiger Seitenansicht, der ohne weiteres auch aus mehreren Teilen zusammengesetzt ausgebildet sein kann, mit an jeder Seite drei Befestigungsgliedern bzw. -stellen 28 A bis 28 C versehen, die gemäß der Beispiele in Figuren 5 bis 10 ausgebildet sein können.

In Figuren 5 bis 10 sind Teile der Gehäuse-Bodenwand 5 mit nach links oben geführter Schraffur und der separate Gehäuseteil 27 mit nach rechts oben geführter Schraffur versehen.

In Figur 5 greift das Ende des Gehäuseteils 27 mit einer Ausnehmung 31 unter eine Aufwölbung 32 der Bodenwand 5 und zusätzlich wird eine Verschweißung 33 vorgenommen.

Figur 6 zeigt eine Haken-Ausnehmung 34 in Verbindung mit einer Haken-Aufwölbung 35 der Bodenwand 5. Figur 7 entspricht etwa Figur 5 jedoch mit größeren Wanddicken im Verhakungsbereich und ohne Verschweißung.

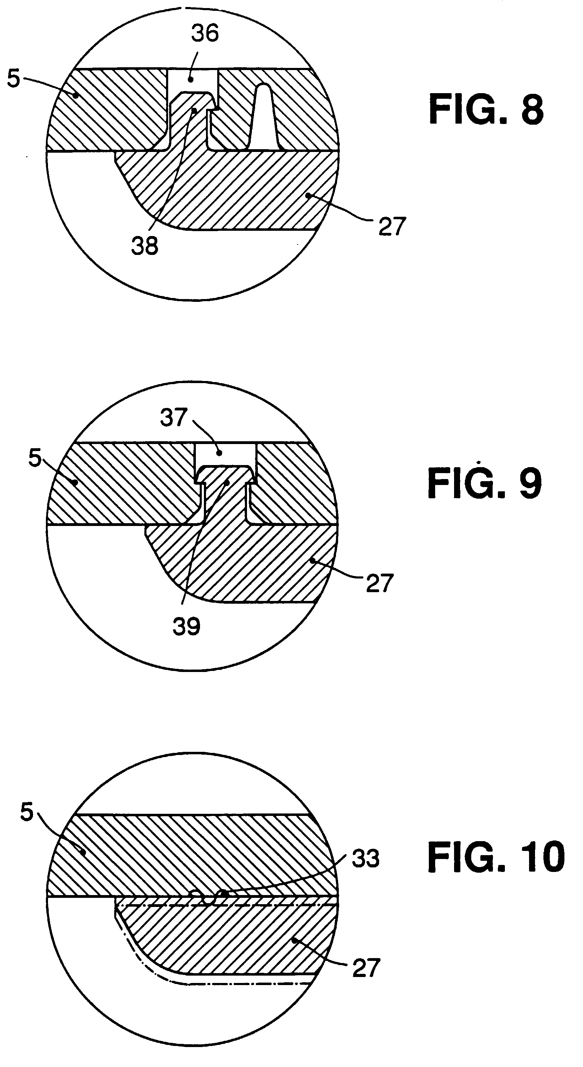

Figur 8 und 9 sind jeweils gekennzeichnet durch eine Schnapp-Öffnung 36 bzw. 37 in der Bodenwand und einem verriegelungszapfen 38 bzw. 39 am separatem Gehäuseteil 27.

Figur 10 zeigt eine Verschweißung 33 als einziges Verbindungsmittel. Die Ausführungen der Figuren 6 bis 9 sind ohne Verschweißungen dargestellt.

Wenn notwendig, können selbstverständlich Verschweißungen oder Verklebungen zusätzlich zu mechanischen Verbindungsmitteln vorgesehen werden. Es können auch wie weitgehend bei Kompakt-Kassetten üblich, Verschraubungen allein oder auch in Verbindung mit anderen Befestigungsmitteln benutzt werden. Das gilt insbesondere für die z.B. in Figur 3 dargestellte Mittelschraube.

Die beschriebenen Befestigungsmittel des planen Gehäuseteils, hier der Gehäuse-Bodenwand 5 bzw. des separaten Gehäuseteils 27, sind beispielsweise örtlich entsprechend den Befestigungsgliedern 28 A bis 28 C vorgesehen. Je nachdem, wie gut die Formnachbildung der genormten oder anderer Kassetten erreicht wird, können auch weniger oder mehr als drei Befestigungsglieder benutzt werden, oder die gesamten Kanten des separaten Gehäuseteils 27 können mit Befestigungsmitteln ausgebildet sein, die ihre Gegenstücke dann entweder an den planen Gehäuseteilen haben müssen, oder auch nicht, wenn die Befestigung über Verschweißen oder Verkleben erfolgt.

Der separate Gehäuseteil 27 mit U-Form in Seitenansicht kann, wie oben erwähnt, mehrteilig sein, wobei dann die mindestens zwei Teile gegenseitig unverrückbar miteinander verbindbar sein sollten, z.B. über eine Verzahnung in einer Trennfuge an der Frontseite der Kassette.

Der separate Gehäuseteil 40 mit U-Form-Querschnitt ist in Figuren 11 a und 11 b einteilig dargestellt.

Figur 11 a zeigt darin eine erste Ansicht D auf die Frontseite und eine zweite Ansicht C von der Rückseite in die offene U-Form.

In Figur 11 b ist die Seitenansicht der U-Form dargestellt.

Der Gehäuseteil 40 besitzt alle für die Aufnahme der planen Gehäuseteile 25 und 26 und den Bandzugang notwendigen Durchbrüche und/oder Öffnungen. Wenn die bisher beschriebenen Verbindungsmittel (Figuren 5 bis 10) nicht ausreichen, ist es möglich, zusätzliche Montagemittel zu verwenden. Innerhalb der U-Form können Längsstege 19 a, b vorgesehen sein, die mit entsprechend angeordneten, in Figur 3 angedeuteten äußeren Nuten in einer oder beiden der planen Gehäuseteile 25 und 26 in Eingriff kommen.

Es ist ferner auch möglich, insbesondere parallel zu und nahe den beiden senkrechten Kanten der Frontöffnungen 41 a und 41 b, Rippen 20 a, b vorzusehen, die die lose Magnetbandschleife 3 a (Figur 4) daran hindern sollen, sich in dem Spalt 21a und 21 b zwischen dem Gehäuseteil 40 und den planen Gehäuseteilen 25 und 26 zu verklemmen. Die beschriebenen Stege 19 und Rippen 20 sind vorzugsweise in bezug auf die Mittellinie m Symmetrisch angeordnet. Außerdem können seitliche Klemmteile 46 vorgesehen sein.

In Figur 12 ist deutlich sichtbar, daß die Bandschlaufe 3 a an dieser Schnittstelle (Linie B-B') eine sehr schmale Kammer 47 zur Verfügung hat, die im wesentlichen durch die Rippen 20 a, b und die Wand 42 begrenzt wird. Die Wand 42 ist in diesem Beispiel Teil des Gehäuseteils 26 und greift in eine Vertiefung 43 im Gehäuseteil 25, um so in diesem vorderen Gehäusebereich einen stabilen Formschluß herzustellen. Wenn die planen Gehäuseteile 25 und 26 annähernd identisch geformt sind, ergibt sich an anderer Schnittstelle entsprechend ein Eingreifen einer Wandung des planen Gehäuseteils 25 in eine zugeordnete Ausnehmung im planen Gehäuseteil 26. Es ist offenbar, daß sich durch das relativ kurze Vorderteil der planen Gehäuseteile 25 und 26, das durch den relativ kleinen Hohlraum 44 entsteht, ein relativ großer Raum 45 mit konstanter Höhe für das aufgewickelte Band 3 ergibt.

Das wenigstens eine separate Gehäuseteil 27, 40 mit U-Form-Querschnitt wird vorzugsweise aus einem thermoplastischen, verspritzbaren Kunstharzmaterial hergestellt.

Dieses Kunstharzmaterial kann wegen erweiterter Gestaltungsmöglichkeiten eine andere Farbe als das Grundgehäuse (bestehend aus den planen Gehäuseteilen) haben und/oder zur wenigstens partiellen Erhöhung der Bruchfestigkeit der Kassette aus einem bruchfesten Kunststoff, wie z.B. Polycarbonat oder Polypropylen usw. bestehen. Um z.B. die Kassette bei Aufzeichnungs- und Wiedergabebetrieb gegen von außen einstrahlende elektrische Felder zu schützen, kann das separate Gehäuseteil mit leitfähigen Materialien im Kunststoff versehen sein. Gegen magnetische Felder kann es aus abschirmendem Metall, insbesondere aus magnetischem Metall oder einer weichmagnetischen Metall-Legierung hergestellt werden.

Es ist, wenn die Verbindungs- oder Befestigungsmittel zwischen separatem Gehäuseteil mit U-Form-Querschnitt und den planen Gehäuseteilen lösbar ausgebildet sind, auch möglich, verschiedenartig ausgebildete separate Gehäuseteile bezüglich Material und/oder Form, z.B. mit unterschiedlicher Anzahl von Frontöffnungen, zu verwenden, das heißt, dieselbe Kassette für verschiedene Anwendungen bzw. unterschiedliche Geräte, z.B. durch zusätzliche Öffnungen für Hinterbandkontrolle, breiter verwendbar zu machen.

Mit einer erfindungsgemäßig ausgebildeten Kompakt-Kassette konnten gegenüber üblichen Kompakt-Kassetten folgende Vorteile in Vergleichsversuchen erreicht werden:

Da der separate Gehäuseteil im Querschnitt U-Form aufweist, ergibt sich die vorteilhafte Möglichkeit, den Gehäuseteil selbst als Verbindungsmittel für die planen Gehäuseteile oder auch nicht plane Gehäuseteile auszubilden. Dieses Verbindungsmittel kann auch zeitweise wirksam eingesetzt werden, z.B. während der Montage der Kassettenhälften, bevor andere Verbindungsmittel eine festere Verbindung herstellen. Dieses Verbindungsmittel kann auch eine Teilverbindungsfunktion für die fertige Kassette besitzen, wobei der separate Gehäuseteil in seiner Sollposition noch zusätzlich über Rastmittel usw. mit den ggfs. planen Gehäuseteilen verbunden sein kann, aber auch wieder davon lösbar ist, wie gerade oben angedeutet, um vielleicht durch einen andersgearteten, separaten Gehäuseteil ersetzt zu werden.

Für eine solche Verbindungsfunktion des separaten Gehäuseteils kann dieser, z.B. mit elastisch nachgiebigem oder federnden oberen oder unteren Armteilen der U-Form ausgebildet sein, so daß die Gehäuseteile zusammenklemmbar sind. Der separate Gehäuseteil kann aber auch mit einer solchen Klemmkraft erzeugenden Klemmitteln, z.B. mindestens einer innenliegenden Blattfeder ausgebildet sein. Es ist auch möglich, den separaten Gehäuseteil mit Armteilen herzustellen, deren freie Enden herstellungsmäßig einen geringeren Abstand als der Länge des Verbindungs-Armteils der U-Form entspricht, aufweist, zur Erzeugung einer Vorspannung für eine Klemmwirkung.

Der separate Gehäuseteil kann auch zweckmäßig als selbst verbindender Teil aus elastisch nachgiebigem Kunststoffmaterial oder federndem Metallmaterial hergestellt sein.

Es wurden in Vergleichsversuchen handelsübliche Kompakt-Kassetten der Anmelderin mit erfindungsgemäßen Kompakt-Kassetten verglichen mit den folgenden Ergebnissen. Beide Kompaktkassetten wurden einer Warmlagerung (WL) von 8 Stunden bei 85°C unterzogen und davor und danach wurde der Azimutwinkel eines Tonkopfspaltes relativ zum Band jeder Kassette gemessen.

Es ergaben sich die Werte der folgenden Tabelle:

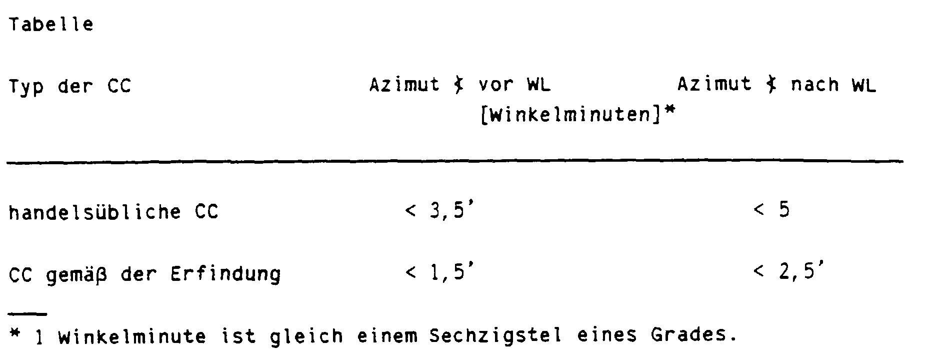

Bei Anwendung der Erfindung ergibt sich damit:

Verbesserung des Azimutwinkels von ≥ Faktor 2, also eine Verminderung der durch die Kassette bedingten Azimutfehler auf mindestens die Hälfte.

Es sind für marktübliche Kompakt-Kassetten keine vergleichbaren Maßnahmen bekannt, um mit vergleichbar geringem Aufwand eine derartige Verbesserung des Azimutwinkels bzw. der Bandführungsgenauigkeit erreichen zu können.

Magnetbandkassetten im Sinne dieser Erfindung sind alle Arten von Ton-, Video-, Daten- und Instrumentations-Bandkassetten, für die die Maßnahmen der Erfindung einsetzbar sind.

Eine Magnetbandkassette ist mit einer Gehäuseerhöhung ausgebildet. Das übliche zweiteilige Gehäuse einer solchen Kassette wird durch im wesentlichen plane Gehäuseteile in Verbindung mit einem separaten Gehäuseteil, mit im wesentlichen U-Form in Seitenansicht, der mit den planen Gehäuseteilen geeignet verbindbar ist, nachgebildet. Die Verbesserung der Stellung der Bandführungselemente ist für alle Arten von vergleichbaren Kassetten zu erzielen.

## Patentansprüche

1. Magnetband-Kassette, insbesondere Kompakt-Kassette, bestehend aus zwei koplanar angeordneten, drehbar gelagerten Wickelkernen und einem dazwischen auf- und abwickelbaren Magnetband und aus Gehäusehälften mit Boden- und Deckelwänden (4 bzw. 5), Vorder-, Rück- und Seitenwänden (6 bzw. 7 bzw. 8), wobei die Gehäusehälften eine von der Vorderwand (6) ausgehende Gehäuseerhöhung (10 a, b) zur Aufnahme des wenigstens einen Magnetkopfes aufweisen, wobei die die Boden- und Deckelwände (4 bzw. 5) der Gehäusehälften bildenden Gehäuseteile (25, 26) im wesentlichen plan ausgebildet sind und die Gehäuseerhöhung (10 a, b) mittels mindestens eines mit den im wesentlichen planen Gehäuseteilen (25, 26) verbindbaren separaten Gehäuseteils nachgebildet ist, dadurch gekennzeichnet, daß der separate Gehäuseteil (27, 40) in Seitenansicht im wesentlichen U-förmig ist und mit beiden im wesentlichen planen Gehäuseteilen (25, 26) verbindbar ist.

2. Kassette nach Anspruch 1, dadurch gekennzeichnet, daß der separate Gehäuseteil (27, 40) durch wenigstens eine Schnapp-, Knöpf- oder Klemmverbindung (31, 32 bzw. 34, 35 bzw. 36, 38 bzw. 27, 39) mit den planen Gehäuseteilen (25, 26) verbindbar ist.

3. Kassette nach Anspruch 1, dadurch gekennzeichnet, daß der separate Gehäuseteil (27) durch Kleben oder Schweißen mit den planen Gehäuseteilen (25, 26) verbunden ist.

4. Kassette nach Anspruch 1-3, dadurch gekennzeichnet, daß der separate Gehäuseteil (27, 40) aus thermoplastischem, spritzbarem Kunststoff besteht.

5. Kassette nach Anspruch 1-3, dadurch gekennzeichnet, daß der separate Gehäuseteil (27, 40) aus Metall, insbesondere einem weichmagnetischen Metall oder einer weichmagnetischen Metall-legierung besteht.

6. Kassette nach einem der Ansprüche 1 bis 5, dadurch gekennzeichnet, daß an der Innenwandung des separaten Gehäuseteils (27, 40) Positionierstege (19 a, 19 b) vorgesehen sind, die mit entsprechenden Vertiefungen/Stegen außen an den planen Gehäuseteilen (25, 26) zusammenwirken.

7. Kassette nach einem der Ansprüche 1 bis 6, dadurch gekennzeichnet, daß der separate Gehäuseteil (40) Frontöffnungen aufweist und in deren Nähe zur Frontseitenlänge senkrechte Rippen (20 a, 20 b) zur Einengung der Bandschlaufe (3 a) vorgesehen sind.

8. Kassette nach einem der Ansprüche 1 bis 7, dadurch gekennzeichnet, daß die planen Gehäuseteile (25, 26) im Bereich des separaten Gehäuseteils (27, 40) Wandteile (40, 41) aufweisen, die formschlüssig ineinandergreifen.

9. Kassette nach einem der Ansprüche 1 bis 8, dadurch gekennzeichnet, daß der separate Gehäuseteil (27, 40) aus andersfarbigem Kunststoff- und/oder Metallmaterial als die planen Gehäuseteile (25, 26) besteht.

10. Kassette nach einem der Ansprüche 1 bis 9, dadurch gekennzeichnet, daß der separate Gehäuseteil (40) die planen Gehäuseteile (25, 26) durch Klemmkraft zusammenhält.

11. Kassette nach Anspruch 10, dadurch gekennzeichnet, daß der separate Gehäuseteil (40) aus flexiblem Kunststcffmaterial besteht.

12. Kassette nach Anspruch 10, dadurch gekennzeichnet, daß der separate Gehäuseteil (40) aus federndem Metallmaterial besteht.

13. Separater Gehäuseteil für eine Magnetband-Kassette, insbesondere Kompakt-Kassette, bestehend aus zwei koplanar angeordneten, drehbar gelagerten Wickelkernen und einem dazwischen auf- und abwickelbaren Magnetband und aus Gehäusehälften mit Boden- und Deckelwänden (4 bzw. 5), Vorder-, Rück- und Seitenwänden (6 bzw. 7 bzw. 8), wobei die Gehäusehälften eine von der Vorderwand (6) ausgehende Gehäuseerhöhung (10 a, b) zur Aufnahme des wenigstens einen Magnetkopfes aufweisen, wobei die die Boden- und Deckelwände (4 bzw. 5) der Gehäusehälften bildenden Gehäuseteile (25, 26) im wesentlichen plan ausgebildet sind und die Gehäuseerhöhung mittels (10 a, b) mindestens eines mit den im wesentlichen planen Gehäuseteilen (25, 26) verbindbaren separaten Gehäuseteils nachgebildet ist, dadurch gekennzeichnet, daß der separate Gehäuseteil (27, 40) in Seitenansicht im wesentlichen U-förmig ist, mit Schnapp-, knöpf-, klemm-, Schraub-, kleb- oder Schweißverbindungsmitteln (28 a-c, 31, 33, 34, 38, 39, 46) für die planen Gehäuseteile (25, 26) ausgebildet ist und Frontöffnungen (41 A, 41 B) für den Eintritt des wenigstens einen Magnetkopfes aufweist.

14. Separater Gehäuseteil nach Anspruch 13, gekennzeichnet durch an der Innenwand vorgesehene Positionierstege (19 a, 19 b) zum Zusammenwirken mit entsprechenden Vertiefungen/Stegen außen an den planen Gehäuseteilen (25, 26).

15. Separater Gehäuseteil nach einem der Ansprüche 13 bis 14, gekennzeichnet durch in der Nähe der Frontöffnungen (41 A, 41 B) vorgesehene Rippen (20 a, 20 b) zur Einengung und Führung des an den Frontöffnungen (41 A, 41 B) entlanggeführten Magnetbandes.

16. Separater Gehäuseteil nach einem der Ansprüche 13 bis 15, dadurch gekennzeichnet, daß derselbe aus thermoplastischem, spritzbarem Kunststoff besteht.

17. Separater Gehäuseteil nach einem der Ansprüche 13 bis 16, dadurch gekennzeichnet, daß derselbe aus Metall, insbesondere einer weichmagnetischen Metallegierung besteht.

18. Separater Gehäuseteil nach einem der Ansprüche 13 bis 16, dadurch gekennzeichnet, daß derselbe aus andersfarbigem Kunststoff- und/oder Metallmaterial als die planen Gehäuseteile (25, 26) besteht.

19. Separater Gehäuseteil nach einem oder mehreren der Ansprüche 13 bis 18, dadurch gekennzeichnet, daß derselbe aus elastisch nachgiebigem oder federnden Material besteht für eine Klemmverbindung der planen Gehäuseteile (15, 26).

## Claims

1. A magnetic tape cassette, in particular a compact cassette, consisting of two rotatably mounted coplanar hubs and a magnetic tape which can be wound and unwound between the hubs, and housing halves having bottom and lid walls (4 and 5, respectively) and front, back and side walls (6 or 7 or 8), the housing halves having a raised housing part (10 a, b) starting from the front wall (6) for accepting the one or more heads, and the housing parts (25, 26) forming the bottom and lid walls (4 and 5, respectively) of the housing halves being essentially planar and the raised housing part (10 a, b) being in the form of one or more separate housing parts which can be connected to the essentially planar housing parts (25, 26), wherein the separate housing part (27, 40) is substantially U-shaped in side view and can be connected to the two essentially planar housing parts (25, 26).

2. A cassette as claimed in claim 1, wherein the separate housing part (27, 40) can be connected to the planar housing parts (25, 26) by one or more snap, button or clamping connections (31, 32 or 34, 35 or 36, 38 or 37, 39).

3. A cassette as claimed in claim 1, wherein the separate housing part (27) is connected to the planar housing parts (25, 26) by adhesive bonding or welding.

4. A cassette as claimed in claim 1 or 2 or 3, wherein the separate housing part (27, 40) consists of injection moldable thermoplastic.

5. A cassette as claimed in claim 1 or 2 or 3, wherein the separate housing part (27, 40) consists of metal, in particular a magnetically soft metal or a magnetically soft metal alloy.

6. A cassette as claimed in any of claims 1 to 5, wherein positioning webs (19 a, 19 b) which interact with corresponding indentations/webs on the outside of the planar housing parts (25, 26) are provided on the inner wall of the separate housing part (27, 40).

7. A cassette as claimed in any of claims 1 to 6, wherein the separate housing part (40) has front orifices and ribs (20 a, 20 b) at right angles to the length of the front are provided close to said orifices, for restricting the tape loop (3 a).

8. A cassette as claimed in any of claims 1 to 7, wherein the planar housing parts (25, 26) possess, in the region of the separate housing part (27, 40), wall parts (40, 41) which engage to form a positive connection.

9. A cassette as claimed in any of claims 1 to 8, wherein the separate housing part (27, 40) consists of plastic and/or metal material of a color which differs from that of the planar housing parts (25, 26).

10. A cassette as claimed in any of claims 1 to 9, wherein the separate housing part (40) holds the planar housing parts (25, 26) together by means of clamping force.

11. A cassette as claimed in claim 10, wherein the separate housing part (40) consists of flexible plastic material.

12. A cassette as claimed in claim 10, wherein the separate housing part (40) consists of springy metal material.

13. A separate housing part for a magnetic tape cassette, in particular a compact cassette, consisting of two rotatably mounted coplanar hubs and a magnetic tape which can be wound and unwound between the hubs, and housing halves having bottom and lid walls (4 and 5, respectively) and front, back and side walls (6 or 7 or 8), the housing halves having a raised housing part (10 a, b) starting from the front wall (6) for accepting the one or more heads, and the housing parts (25, 26) forming the bottom and lid walls (4 and 5, respectively) of the housing halves being essentially planar and the raised housing part (10 a, b) being in the form of one or more separate housing parts which can be connected to the essentially planar housing parts (25, 26), wherein the separate housing part (27, 40) is substantially U-shaped in side view, is constructed with snap, button, clamping, screw, adhesive bonding or welding connection means (28 a-c, 31, 33, 34, 38, 39, 46) for the planar housing parts (25, 26) and has front orifices (41 A, 41 B) for the entry of at least one head.

14. A separate housing part as claimed in claim 13, which has positioning webs (19 a, 19 b) provided on the inner wall for cooperation with corresponding indentations/webs on the outside of the planar housing parts (25, 26).

15. A separate housing part as claimed in claim 13 or 14, which has ribs (20 a, 20 b), provided close to the front orifices (41 A, 41 B) for restricting and guiding the magnetic tape guided along the front orifices (41 A, 41 B).

16. A separate housing part as claimed in any of claims 13 to 15, which consists of injection moldable thermoplastic.

17. A separate housing part as claimed in any of claims 13 to 16, which consists of metal, in particular a magnetically soft metal alloy.

18. A separate housing part as claimed in any of claims 13 to 16, which consists of plastic and/or metal material of a color which differs from that of the planar housing parts (25, 26).

19. A separate housing part as claimed in one or more of claims 13 to 18, which consists of flexible or springy material for a clamping connection of the planar housing parts (15, 26).

## Revendications

1. Cassette à bande magnétique, en particulier cassette compacte constituée de deux noyaux d'enroulement, disposés coplanaires, montés tournants et d'une bande magnétique, susceptible d'être enroulée et déroulée entre ces deux noyaux et de moitiés de carter ayant des parois de fond et des parois de couvercle (4, respectivement 5), des parois avant, arrière et latérales (6, respectivement 7, respectivement 8), les moitiés de carter présentant une élévation de carter (10a, b) partant de la paroi avant (6) pour recevoir la au moins une tête magnétique, les parties du carter (25, 26) constituant les parois fond et les parois couvercle (4, respectivement 5) des moitiés de carter étant réalisées sensiblement planes et l'élévation de carter (10a, b) étant l'objet d'un post-formage fait au moins à l'aide d'une partie de carter séparée, susceptible d'être reliée à des parties du carter (25, 26) sensiblement planes, caractérisée par le fait que la partie de carter (27, 40) séparée a, en vue de côté, une forme sensiblement en U et est susceptible d'être reliée aux deux parties de carter (25, 26) sensiblement planes.

2. Cassette selon la revendication 1, caractérisée par le fait que la partie de carter (27, 40) séparée est susceptible d'être reliée aux parties de carter planes (25, 26), à l'aide d'au moins une liaison à encliquetage, à bouton ou à serrage (31, 32, respectivement 34, 35, respectivement 36, 38, respectivement 27, 39).

3. Cassette selon la revendication 1, caractérisée par le fait que la partie de carter séparée (27) est reliée aux parties de carter planes (25, 26) par collage ou soudage.

4. Cassette selon les revendications 1 à 3, caractérisée par le fait que la partie de carter séparée (27, 40) est réalisée en matière synthétique injectable, thermoplastique.

5. Cassette selon les revendications 1 à 3, caractérisée par le fait que la partie de carter séparée (27, 40) est en métal, en particulier un métal magnétiquement doux, ou bien un alliage métallique magnétiquement doux.

6. Cassette selon les revendications 1 à 5, caractérisée par le fait que, sur la paroi intérieure de la partie de carter séparée (27, 40), sont prévues des nervures de positionnement (19a, 19b) qui coopèrent avec des cavités/nervures correspondantes ménagées sur les parties de carter planes (25, 26).

7. Cassette selon l'une des revendications 1 à 6, caractérisée par le fait que la partie de carter séparée (40) présente des ouvertures avant et, à leur proximité, des nervures (20a, 20b) perpendiculaires par rapport à la longueur du côté avant, pour étrangler la boucle de bande (3a).

8. Cassette selon l'une des revendications 1 à 7, caractérisée par le fait que les parties de carter planes (25, 26) présentent, dans la zone des parties de carter séparées (27, 40), des parties de paroi (40, 41) s'engageant les unes dans les autres avec ajustement de forme.

9. Cassette selon l'une des revendications 1 à 8, caractérisée par le fait que la partie de carter séparée (27, 40) est constituée d'un matériau synthétique d'autre couleur et/ou un matériau métallique que celui des parties de carter planes (25, 26).

10. Cassette selon l'une des revendications 1 à 9, caractérisée par le fait que la partie de carter séparée (40) maintient assemblées les parties de carter planes (25, 26) par la force d'un serrage.

11. Cassette selon la revendication 10, caractérisée par le fait que la partie de carter séparée (40) est en matériau synthétique flexible.

12. Cassette selon la revendication 10, caractérisée par le fait que la partie de carter séparée (40) est en un matériau élastique.

13. Partie de carter séparée pour une cassette à bande magnétique, en particulier une cassette compacte, constituée de deux noyaux d'enroulement, disposés coplanaires, montés tournants et d'une bande magnétique, susceptible d'être enroulée et déroulée entre ces noyaux d'enroulement, et constituée de moitiés de carter ayant des parois de fond et des parois de couvercle (4, respectivement 5), des parois avant, arrière et latérales (6, respectivement 7, respectivement 8), les moitiés de carter présentant une élévation de carter (10a, b), partant de la paroi avant (6), pour recevoir la au moins une tête magnétique, les parties du carter (25, 26) constituant les parois fond et les parois couvercle (4, respectivement 5) des moitiés de carter étant réalisées sensiblement planes et l'élévation de carter (10a, b) étant l'objet d'un post-formage fait à l'aide d'au moins une partie de carter séparée, susceptible d'être reliée aux parties du carter (25, 26) sensiblement planes, caractérisée par le fait que la partie de carter séparée (27, 40) a une section transversale sensiblement en U avec des liaisons à encliquetage, ondulation, serrage, vissage, collage ou soudage (28a à c, 31, 33, 34, 38, 39, 46) pour les parties de carter planes (25, 26) et présentant des ouvertures avant (41A, 41B) pour l'entrée de la au moins une tête magnétique.

14. Partie de carter séparée selon la revendication 13, caractérisée par des nervures de positionnement (19a, 19b) prévues sur la paroi intérieure, destinées à coopérer avec des cavités/nervures correspondantes, ménagées extérieurement aux parties de carter planes (25, 26).

15. Partie de carter séparée selon l'une des revendications 13 à 14, caractérisée par des nervures (20a, 20b), prévues à proximité des ouvertures avant (41A, 41B), pour étrangler et guider la bande magnétique guidée le long des ouvertures avant (41A, 41B).

16. Partie de carter séparée selon l'une des revendications 13 à 15, caractérisée par le fait qu'elle est réalisée en une matière synthétique injectable, thermoplastique.

17. Partie de carter séparée selon l'une des revendications 13 à 16, caractérisée par le fait qu'elle est réalisée en métal, en particulier en un alliage métallique à magnétisme doux.

18. Partie de carter séparée selon l'une des revendications 13 à 16, caractérisée par le fait qu'elle est réalisée en une matière synthétique et/ou un matériau métallique d'une autre couleur que celle des parties de carter planes (25, 26).

19. Partie de carter séparée selon l'une ou plusieurs des revendications 13 à 18, caractérisée par le fait qu'elle est réalisée en un matériau élastique déformable ou un matériau à effet élastique, pour obtenir une liaison par serrage des parties de carter planes (15, 26).
